(19) Europäisches Patentamt
European Patent Office
Office européen des brevets

(11) **EP 1 685 555 B1**

(12) **EUROPEAN PATENT SPECIFICATION**

(45) Date of publication and mention
of the grant of the patent:
**14.01.2009 Bulletin 2009/03**

(21) Application number: **04799093.2**

(22) Date of filing: **09.11.2004**

(51) Int Cl.:
**G10L 15/18** (2006.01)        **G06F 17/27** (2006.01)

(86) International application number:
**PCT/IB2004/052352**

(87) International publication number:
**WO 2005/048240 (26.05.2005 Gazette 2005/21)**

(54) **ASSIGNMENT OF SEMANTIC TAGS TO PHRASES FOR GRAMMAR GENERATION**

VERGABE SEMANTISCHER ETIKETTEN AN PHRASEN FÜR DIE GRAMMATIKERZEUGUNG

ATTRIBUTION DE BALISES SEMANTIQUES A DES SEGMENTS DE PHRASES A DES FINS DE GENERATION DE GRAMMAIRE

(84) Designated Contracting States:
**AT BE BG CH CY CZ DE DK EE ES FI FR GB GR HU IE IS IT LI LU MC NL PL PT RO SE SI SK TR**

(30) Priority: **12.11.2003 EP 03104170**

(43) Date of publication of application:
**02.08.2006 Bulletin 2006/31**

(73) Proprietors:
• **Philips Intellectual Property & Standards GmbH 20099 Hamburg (DE)**
Designated Contracting States:
**DE**
• **Koninklijke Philips Electronics N.V. 5621 BA Eindhoven (NL)**
Designated Contracting States:
**AT BE BG CH CY CZ DK EE ES FI FR GB GR HU IE IS IT LI LU MC NL PL PT RO SE SI SK TR**

(72) Inventor: **MARTIN, Sven,**
**c/o Philips Int. Pty. & Stand. GmbH**
**52066 Aachen (DE)**

(74) Representative: **Volmer, Georg**
**Philips Intellectual Property & Standards GmbH**
**Postfach 50 04 42**
**52088 Aachen (DE)**

(56) References cited:
**EP-A2- 1 465 155          US-A1- 2003 191 625**

• **WANG Y-Y ET AL: "Combination of CFG and N-gram Modeling in Semantic Grammar Learning" EUROPEAN CONFERENCE ON SPEECH COMMUNICATION AND TECHNOLOGY (EUROSPEECH), XX, XX, September 2003 (2003-09), pages 2809-2812, XP007007121**

**Description**

The present invention relates to the field of automated language understanding for dialogue applications.

Automatic dialogue systems and telephone based machine enquiry systems are nowadays widely spread for providing information, as e.g. train or flight timetables or receiving enquiries from a user, as e.g. bank transactions or travel bookings. The crucial task of an automatic dialogue system consists of the extraction of necessary information for the dialogue system from a user input, which is typically provided by speech.

The extraction of information from speech can be divided into the two steps of speech recognition on the one hand side and mapping of recognized speech to semantic meanings on the other hand side. The speech recognition step provides a transformation of the speech received from a user in a form that can be machine processed. It is then of essential importance, that the recognized speech is interpreted by the automatic dialogue system in the correct way. Therefore, an assignment or a mapping of recognized speech to a semantic meaning has to be performed by the automatic dialogue system. For example for a train timetable dialogue system the enquiry "I need a connection from Hamburg to Munich", the two cities "Hamburg" and "Munich" have to be properly identified as origin and destination of the train travel.

Essential fragments of the above sentence "from Hamburg" or "to Munich" have to be extracted and to be understood by the automatic dialogue system to the extent, that the phrase "from Hamburg" is mapped to the origin semantic tag whereas the phrase "to Munich" is mapped to the destination semantic tag. When all semantic tags like origin, destination, time, date, or other travel specifications are mapped to phrases of the user enquiry, the dialogue system can perform a required action.

The assignment of mapping of recognized phrases to semantic tags is typically provided by some kind of grammar. A grammar contains rules defining the mapping of semantic tags to the phrases. Such rule based grammars have been the most investigated subject of research in the field of natural language understanding and are often incorporated in actual dialogue systems. An example of an automatic dialogue system as well as a general description of automatic dialogue systems is given in the paper "H. Aust, M. Oerder, F. Seide, V. Steinbiss; the Philips Automatic Train Timetable Information System, Speech Communication 17 (1995) 249-262".

Since an automatic dialogue system is typically designated to a distinct purpose, as e.g. a timetable information or an enquiry processing system, the underlying grammar is individually designed for those distinct purposes. Most of the grammars known in the prior art are manually written in that sense that the rules constituting the grammar cover a huge set of phrases and various combinations of phrases that may appear within a dialogue.

In order to perform a mapping between a phrase and a semantic tag, the phrase or the combination of phrases has to match at least one of the rules of the manually written grammar. The generation of such a hand written grammar is an extreme time consuming and resource wasting process, since every possible combination of phrases or variations of a dialogue have to be explicitly taken into account by means of individual rules. Furthermore a manually created grammar is always subject to maintenance, because the underlying set of rules may not cover all types of dialogues and types of phrases that typically occur during operation of the automatic dialogue system.

In general, grammars for automatic dialogue systems are application related, which means that a distinct grammar is always designated to a distinct type of automatic dialogue system. Therefore, for each type of automatic dialogue system a special grammar has to be manually constructed. It is clear that such a generation of a multiplicity of different grammars represents a considerable cost factor which should be minimized.

In order to reduce a rather costly amount of manual efforts for generation, maintenance and adaptation of grammars, methods for an automatic generation of grammars or automatic learning of grammars have been introduced recently. An automatic construction of a grammar is typically based on a corpus of weekly annotated training sentences. Such a training corpus can for example be derived by logging the dialogue of an existing application. However, an automatic learning further requires a set of annotations indicating which phrases of the training corpus are assigned to which known tag. Typically, this annotation has to be performed manually but it is in general less time consuming than the generation of an entire grammar.

Wang et al.: 'Combination of CFG and N-gram Modeling in Semantic Grammar Learning' European Conference on Speech Communication and Technology (Eurospeech), September 2003, pages 2809 to 2812, XP007007121, describe the SGStudio system, which is a grammar authoring tool that is a semantic grammar development. SGStudio learns to create a domain specific grammar from a semantic schemer that defines the semantics of the domain, a grammar library that contains CFG rules and from training data with the meaning annotated according to the schemer. SGStudio assumes that the syntactic structures are invariable for the type of language used in human computer interaction. The structural constraints are thus encoded into template rules and the semantic constraints are treated as the template variables. The template grammar models the language of a user used to command a machine to do a specific task with a command path followed by properties. The properties path incorporates slots in the schemer, wherein each slot is bracketed with a preamble and a post amble. The commands, preambles and post ambles are not defined in the template grammar. The language expressions for them are learned from the semantic annotations. The annotated slots serve thereby as the anchor points in the mapping, and the rest of the words in the input can be aligned to the pre-terminals according to their positions relative to those anchor points.

The document US2003/0191625 A1 discloses a method and system for creating a named entity language model. The method includes recognizing input communications from a training corpus, passing the training corpus, tagging the passed training corpus, aligning the recognized training corpus with the tagged training corpus, and creating a named entity language model from the aligned corpus.

The document EP1 465 155 A2 discloses a method of generating a rules based grammar for natural language processing. Segmentation ambiguities are identified in training data. Re-write rules for the ambiguous segmentations are enumerated and probabilities are generated for each. Ambiguities are resolved based on the probabilities. In one embodiment, this is done by applying the Expectation Maximation (EM) algorithm.

The paper "K Macherey, F. J. Och and H. Ney; Natural Language Understanding using Statistical Machine Translation', presented at the 7th EuropeanConference on Speech Communication and Technology, Aalborg, Denmark, September 2001" which is also available from the URL "http://wasserstoff.informatik.rwth-aachen.de/Colleagues/och/eurospeech2001.ps" describes the automatic learning of a grammar.

In fact the document discloses an approach to natural language understanding, which is derived from the field of statistical machine translation. The problem of natural language understanding is described as a translation from source sentence to a formal language target sentence. This method therefore aims to reduce the employment of grammars in favour of a learning of dependencies between words and their meaning automatically. To this extent the mentioned method deals with a translational problem rather than with the automatic generation of a grammar.

In contrast to that, the US Patent application US 2003/0081024 A1 explicitly concentrates on the learning of a grammar. This method is based on determining sequences of terminals or of terminals and wild cards linked to non terminals of a grammar in a training corpus of sentences. After sequences of terminals or terminals and wild cards have been determined they are assigned to a non terminal or no non terminal by means of a classification procedure. This classification in turn uses an exchange procedure which is based on an exchange algorithm. The exchange algorithm guarantees an efficient optimization of a target function which takes account of all incorrect classifications and which is iteratively optimized in the classification of the sequences of terminals or of terminals and wild cards. Thereby the order of the non terminals in the training sentences does not have to be annotated manually since the target function uses only the information as to which sequences of terminals or of terminals and wild cards and which non terminals are present in the training sentences. Furthermore, the exchange procedure guarantees an efficient (local) optimization of the target function since only a few operations are necessary for calculating the change in the target function upon the execution of an exchange.

The present invention aims to provide another method for mapping semantic tags to phrases and thereby providing the generation of a grammar for an automatic dialogue system.

The invention as defined by the appended claims, provides an automatic learning of semantically useful word phrases from weekly annotated corpus sentences. Thereby a probabilistic dependency between word phrases and semantic concepts or semantic tags is estimated. The probabilistic dependency describes the likelihood that a given phrase is mapped or assigned to a distinct semantic tag. In this context a phrase is used as a generic term for fragments of a sentence, a sequence of words or in the minimal case a single word.

The probabilistic dependency between phrases and tags is further denoted as mapping probability and its determination is based on the training corpus of sentences. Initially, the method has no information about the annotation between tags and phrases of the training corpus. In order to perform a calculation of the mapping probability a weak annotation between phrases and semantic tags must be somehow provided. Such a weak annotation can be realized for example by assigning a set of candidate semantic tags to a phrase. Alternatively an IEL (inclusion/exclusion list) can be used. An IEL represents a list that includes or excludes various semantic tags that can be mapped or must not map a phrase.

According to a preferred embodiment of the invention, for each phrase of the training corpus an entire set of mapping probabilities between the phrase and the corresponding set of candidate semantic tags is determined. In this way a probability that a given phrase is assigned to a semantic tag is calculated for each possible combination between the phrase and the entire set of candidate semantic tags which yields in an automatic learning or generation of a grammar.

The method for mapping semantic tags to phrases makes therefore explicit use of the determination of mapping probabilities. Such a mapping probability can for example be determined from the given weak annotation between phrases and semantic tags of the training corpus. Generally, there exists a plurality of probabilistic means to generate such a mapping probability.

According to a further preferred embodiment of the invention, the statistical procedure, hence the calculation of the mapping probabilities, is performed by means of a expectation maximization (EM algorithm). EM algorithms are commonly known from forward backward training for Hidden Markov Models (HMM). A specific implementation of the EM algorithm for the calculation of mapping probabilities is given in the mathematical annex.

According to a further preferred embodiment of the invention, a grammar can be derived from the performed mappings between a candidate semantic tag and a phrase. Preferably the calculated and performed mappings are stored by some kind of storing means in order to keep the computational efforts on a low level. Finally, the derived grammar can be applied to new, unknown sentences.

The overall performance of the method of the invention can be enhanced when the EM algorithm is applied iteratively. In this case the result of an iteration of the EM algorithm is used as input for the next iteration. For example an estimated probability that a phrase is mapped to a tag is stored by some kind of storing means and can then be reused in a proceeding application of the EM algorithm. In a similar way the initial conditions in form of weak annotations between phrases and tags or in form of an IEL can be modified according to previously performed mapping procedures according to the EM algorithm.

In order to test the efficiency and reliability of an EM based algorithm for grammar learning, the EM based algorithm has been implemented by making use of a so called Boston Restaurant Guide corpus. Experiments based on this implementation demonstrate that an EM based procedure leads to better results than a procedure based on an exchange algorithm as illustrated in US Pat No. 2003/0061024 A1, especially when large training corpora are used. Furthermore, it has been demonstrated, that a repeated application of the EM based procedure leads to continuous improvements of the generated grammar. The tag error rate, which is defined as the ratio between the number of falsely mapped tags and the total number of tags, shows a monotone descent when described as a function over the number of iterations. The main improvements of the tag error rate are already reached after two or even one iteration.

In the following, preferred embodiments of the invention will be described in greater detail by making reference to the drawings in which:

Fig. 1 is illustrative of a flow chart for the mapping of phrases and tags by means of an EM based algorithm,
Fig. 2 shows a flow chart illustrating a dynamic programming construction of a table L which is a subroutine for the EM algorithm,
Fig. 3 is illustrative of a flow chart describing the implementation of the EM algorithm.

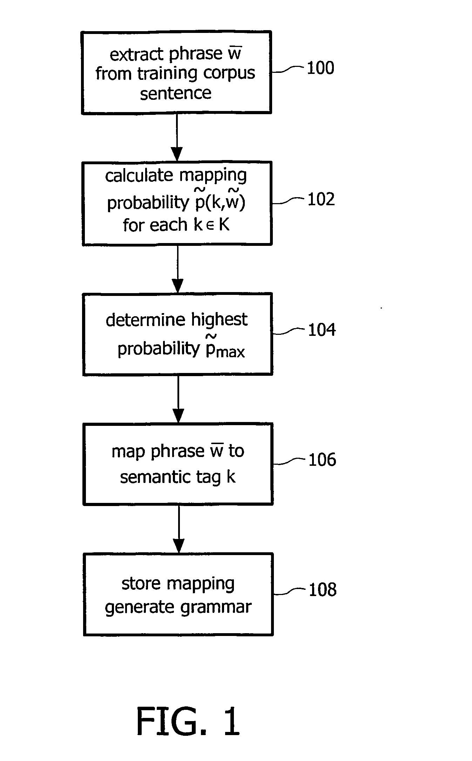

Figure 1 shows a flow chart for mapping of semantic tags to phrase based on the EM algorithm. In a first step 100 a phrase $\overline{w}$ is extracted from a training corpus sentence. In the following step 102 a step of mapping probabilities $p(k, w)$ for each tag $k$ from a list of unordered tags $\kappa$.

Once a set of mapping probabilities has been calculated for the phrase $\overline{w}$, the highest probability of the set of mapping probabilities $p(k, w)$ is determined in the following step 104. In the next step 106 the mapping between the phrase $\overline{w}$ and a semantic tag $k$ is performed. The phrase $\overline{w}$ is mapped to a single tag $k$ according to the highest probability $p(k, w)$ of the set of mapping probabilities, which has been determined in step 104. In this way the mapping between a semantic tag $k$ and a phrase $\overline{w}$ is performed by making use of a probabilistic estimation based on a training corpus. The probabilistic estimation determines the likelihood, that a semantic tag $k$ is mapped to a phrase $\overline{w}$ within the training corpus. When the mapping has been performed in step 106 it is stored by some kind of storing means in step 108 in order to provide the performed mapping for a proceeding application of the algorithm. In this way, the procedure can be performed iteratively leading to a decrease of the tag error rate and thus to an enhancement of the reliability and efficiency of the entire grammar learning procedure.

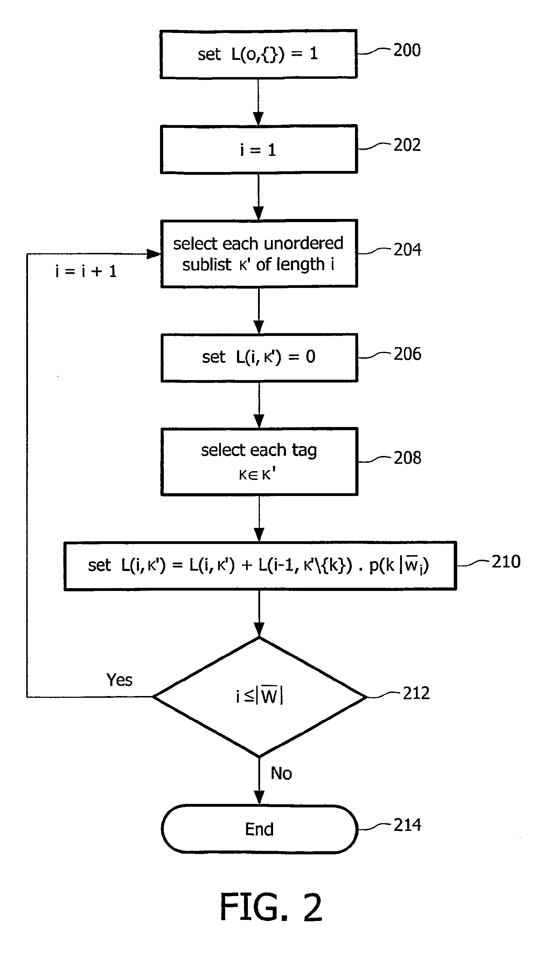

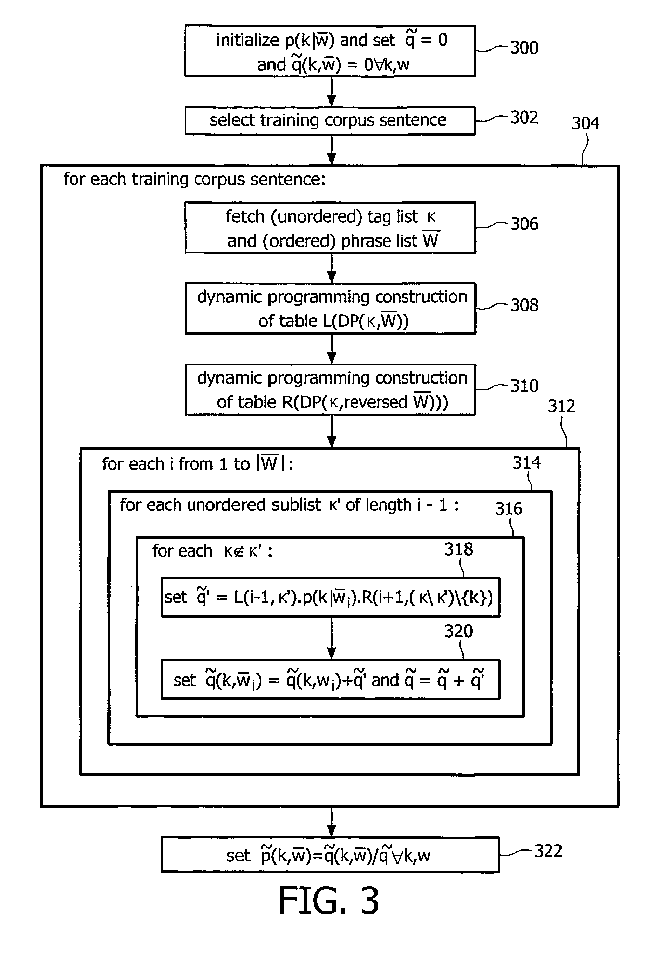

The calculation of the mapping probability which is performed in step 102 is based on the EM algorithm, which is explicitly explained in the mathematical annex by making reference to figure 2 and figure 3.

The calculation of the mapping probability according to the EM algorithm is based on two additional probabilities denoted as $L(i,\kappa')$ and $R(i,\kappa')$, respectively, representing the probabilities for all permutations of an unordered tag sublist $\kappa'$ of length $i - 1$ over the left subsentence and the unordered complement tag sublist over the right subsentence of a training corpus sentence from position $i + 1$.

Figure 2 is illustrative of a flow chart for calculating the probability $L(i,\kappa')$.

In a first step 200, the initial probability for $i = 0$ is set to unity before in the next step 202, the index of the tag sublist $i$ is initialized to $i = 1$. In the following step 204, each sublist of length $i$ is selected from the unordered tag sublist $\kappa'$. After selecting each sublist the calculation procedure continues with step 206, in which the probability $L(i,\kappa') = 0$ for a permutation is set to zero. Then, in step 208 each tag $k$ from the unordered sublist is selected in step 208, and successively provided to step 210, in which the permutation probability is calculated according to:

$$L(i,\kappa') = L(i,\kappa') + L(i-1,\kappa' \setminus \{k\}) \cdot p(k \mid \overline{w}_i).$$

After the calculation of $L(i,\kappa')$, in step 212, the index $i$ is compared to the number of words in the phrase $\overline{W}$. If $i$ is less or equal $|\overline{W}|$, the procedure returns to step 204 by incrementing index $i$ by one. Otherwise, when $i$ is larger than $|\overline{W}|$, the procedure for calculating the permutation probability ends with step 214.

Once the permutation probability has been calculated according to the procedure described in figure 2, an analog calculation is performed in order to obtain the permutation probability $R$ for the complement sublist of the right subsentence.

Figure 3 finally illustrates the implementation of the EM algorithm for calculating a mapping probability $\widetilde{p}(k, \overline{w})$ by making use of the above described permutation probabilities.

In the first step 300 for all tags $k$ and phrases $w$ the probability $p(k \mid \overline{w})$ is initialized by setting $\widetilde{q} = 0$ and setting $\widetilde{q}(k, \overline{w}) = 0$, before in step 302 one of the training corpus sentences is selected. Since every sentence of the training corpus is taken into account for the grammar learning, the following step 304 has to be applied to all sentences of the training corpus.

After a sentence of the training corpus has been selected in step 302 it is further processed in step 304, in which the steps 306, 308, 310, and 312 are successively performed. In step 306, an unordered tag list $\kappa'$ as well as an ordered phrase list $\overline{W}$ are selected. In the next step 308, the dynamic programming construction of the table $L$ is performed as described in figure 2. After that, a similar procedure is performed with the reversed table $R$ in step 310.

The calculated tables $L$ and $R$ as well as the initialized probabilities are further processed in step 312. Step 312 can be interpreted as a nested loop with an index $i = 1$, $i \leq |W|$. For each $i$, step 314 is performed initializing another loop for each of the unordered sublists $\kappa$ of length $i - 1$. For each unordered sublist the step 316 is performed selecting each tag $k \notin \kappa'$ and performing the following calculation in step 318:

$$\widetilde{q}' = L(i-1, \kappa') \cdot p(k \mid \overline{w}_i) \cdot R(i+1, (\kappa \setminus \kappa' \setminus \{k\})),$$

where $\widetilde{q}'$ is further processed in step 320 according to:

$$\widetilde{q}(k, \overline{w}_i) = \widetilde{q}(k, \overline{w}_i) + \widetilde{q}' \ \text{ and } \ \widetilde{q} = \widetilde{q} + \widetilde{q}'.$$

When the steps 318 and 320 have been executed for each tag $k \notin \kappa'$ in step 316, when step 316 has been performed for each unordered sublist of length $i - 1$ in step 314, when step 314 has been performed for each index $i \leq |\overline{W}|$ in step 312, and when finally the entire procedure given by step 312 has been performed for each sentence of the training corpus, then in step 322 the mapping probability is determined according to:

$$\widetilde{p}(k, \overline{w}) = \widetilde{q}(k, \overline{w}) / \widetilde{q} \ \forall k, w.$$

Once the mapping probability has been determined, it is preferably stored by some kind of storing means. For the purpose of grammar learning and for mapping a tag to a given phrase all probabilities of all possible combinations of phrases and candidate semantic tags are calculated and stored. Finally, the mapping of a semantic tag to a given phrase is performed according to the maximum probability of all calculated probabilities for the given phrase.

Based on the plurality of performed mappings, the grammar is finally deduced and can be applied to other and hence unknown sentences that may occur in the framework of an automated dialog system.

Especially when the EM algorithm is repeatedly applied to a training corpus of sentences, the overall efficiency of the grammar learning procedure increases and the tag error rate decreases.

MATHEMATICAL ANNEX

According to a preferred embodiment of the invention, the mapping probability $\widetilde{p}(k, \overline{w})$, that a given phrase $\overline{w}$ is mapped to a semantic tag $k$ is calculated by means of an expectation maximization (EM) algorithm. The implementation and adaptation of a EM algorithm are described in this section.

Here, an approach which is similar to forward backward training of HMMs is followed. The general equation for EM based grammar learning is given by:

$$\widetilde{p}(k,\overline{w}) = \frac{\sum_{K} p(K \mid W) \cdot N_{K}(k,\overline{w})}{\sum_{K} p(K \mid W) \sum_{\overline{w}',k'} N_{K}(k',\overline{w}')}, \qquad (1)$$

where $W$ is a sequence of phrases, $K$ is a tag sequence, $\overline{w}$ is a phrase, $k$ is a semantic tag, $N_K(k, \overline{w})$ is the occurrence that $k$ and $\overline{w}$ occur together for a given $W$ and $K$, and $p(K|W)$ gives the probability that a sequence of phrases $W$ is mapped to a tag sequence $K$.

This approach assumes that the number of tags $s$ equals the number of phrases. The numerator of equation (1):

$$\sum_{K} p(K \mid W) \cdot N_{K}(k,\overline{w})$$

adds for each tag sequence $K$ the probability $p(K|W)$ as many times as the tag $k$ is mapped to phrase $\overline{w}$ in this tag sequence. This may be rewritten as follows:

$$\sum_{K} p(K \mid W) \cdot N_{K}(k,\overline{w}) = \sum_{K} \sum_{i} p(K \mid W) \cdot \delta(k_i, k) \cdot \delta(\overline{w}_i, \overline{w})$$

$$= \sum_{i:\overline{w}_i=\overline{w}} \underbrace{\sum_{K:k_i=k} p(K \mid W)}_{=p(k_i=k|W)}$$

where $\delta(x, y)$ is the usual delta function

$$\delta(x,y) = \begin{cases} 1, x = y \\ 0, else \end{cases}$$

and $p(k_i = k \mid \overline{W})$ is the overall probability that the phrase $\overline{w}$ at position $i$ in the phrase string $W$ is mapped to tag $k$. Similarly, for the denominator of Eq.(1) the following holds:

$$\sum_{K} p(K \mid W) \cdot \sum_{k',\overline{w}'} N_{K}(k',\overline{w}') = \sum_{k',\overline{w}'} \sum_{K} p(K \mid W) \cdot N_{K}(k',\overline{w}')$$

$$= \sum_{i,k'} p(k_i = k' \mid W),$$

resulting into the estimation formula

$$\widetilde{p}(k,\overline{w}) = \frac{\sum_{i:\overline{w}_i=\overline{w}} p(k_i = k \mid W)}{\sum_{i,k'} p(k_i = k' \mid W)}. \qquad (2)$$

For the estimation over the whole corpus, numerator and denominator must be separately computed und summed up for each corpus sentence.

The probability $p(k_i = k \mid \overline{W})$ that is central to Eq.(1) computes the probability of all tag sequences that have tag $k$ for the phrase at position $i$. Before and after position $i$, all remaining permutations of tags are possible. If $\kappa$ is the unordered list of tags and $\pi(\kappa)$ the set of all possible permutations over $\kappa$ then

$$p(k_i = k \mid W)$$

$$= \sum_{K \in \pi(\kappa):k_i=k} p\ (K \mid W)$$

$$= \sum_{K \in \pi(\kappa):k_i=k} \left( \prod_{j=1}^{i-1} p(k_j \mid \overline{w}_j) \right) p(k \mid \overline{w}_i) \cdot \left( \prod_{j=i+1}^{s} p(k_j \mid \overline{w}_j) \right)$$

$$= \sum_{\kappa' \subseteq (\kappa\backslash\{k\}):|\kappa'|=i-1} \underbrace{\left( \sum_{\pi(\kappa')} \left( \prod_{j=1}^{i-1} p(k_j \mid \overline{w}_j) \right) \right)}_{=L(i-1,\kappa')} \cdot p(k \mid \overline{w}_i) \cdot \underbrace{\left( \sum_{\pi((\kappa\backslash\kappa'\backslash\{k\})} \left( \prod_{j=j+1}^{s} p(k_j \mid \overline{w}_j) \right) \right)}_{R(i+1,\kappa'\backslash\kappa')\backslash\{k\})}$$

$L(i-1,\kappa')$ is the probability for all permutations of the unordered tag sublist $\kappa'$ of length $i$-1 over the left subsentence up to position $i$-1, and $R(i+1,(\kappa\backslash\kappa')\backslash\{k\})$ is the probability for all permutations of the unordered complement tag sublist $(\kappa\backslash\kappa')\backslash\{k\}$ of length $s$-$i$ over the right subsentence from position $i$+1. These values can be recursively computed:

$$L(i,\kappa') = \sum_{K \in \pi(\kappa')} \prod_{j=1}^{i} p(k_j \mid \overline{w}_j)$$

$$= \sum_{\kappa \in \kappa'} \sum_{K \in \pi(\kappa'):k_i=k} \prod_{j=1}^{i} p(k_j \mid \overline{w}_j)$$

$$= \sum_{\kappa \in \kappa'} p(k \mid \overline{w}_i) \sum_{K \in \pi(\kappa'\backslash\{k\})} \prod_{j=1}^{i-1} p(k_j \mid \overline{w}_j)$$

$$= \sum_{\kappa \in \kappa'} p(k \mid \overline{w}_i) \cdot L(i-1,\kappa'\backslash\{k\}) . \qquad (3)$$

Similarly,

$$R(i,\kappa') = \sum_{\kappa \in \kappa'} p(k \mid \overline{w}_i) \cdot R(i+1,\kappa'\backslash\{k\}) . \qquad (4)$$

Storing and re-using the values $L(i,\kappa')$ and $R(i,\kappa')$ in Eqs. (3) and (4) reduces computational costs. For a given $i$, there are $\binom{|\kappa|}{i}$ unordered tag lists $\kappa'$ and thus $\sum_{i=1}^{|\kappa|-1} \binom{|\kappa|}{i} \cdot i$ operations to perform to fully compute the table $L$ (same holds for table $R$). However, no closed form or good estimation for this has been found, so it is not clear whether the computation is not efficient in the sense that it has a polynomial computing time.

The implementation of the EM algorithm is a direct consequence from the above mentioned expressions. The implementation is further described by Figs 2 and 3 for one iteration. There are just some notes about the implementation:

For technical reasons, each element of the unordered tag list $\kappa$ gets a unique index in the range from 1 to $|\kappa|$. An unordered sublist $\kappa'$ of length $i$ is represented as an $i$- dimensional vector whose scalar elements are the indexes of the elements from $\kappa$ that participate in $\kappa'$. This vector is incremented

$$\begin{pmatrix} 1 \\ 2 \\ . \\ . \\ . \\ i-1 \\ i \end{pmatrix} \rightarrow \begin{pmatrix} 1 \\ 2 \\ . \\ . \\ . \\ i-1 \\ i+1 \end{pmatrix} \rightarrow \dots \rightarrow \begin{pmatrix} 1 \\ 2 \\ . \\ . \\ . \\ i-1 \\ |\kappa| \end{pmatrix} \rightarrow \begin{pmatrix} 1 \\ 2 \\ . \\ . \\ . \\ i \\ i+1 \end{pmatrix} \rightarrow \dots \rightarrow \begin{pmatrix} |\kappa|-i+1 \\ |\kappa|-i+2 \\ . \\ . \\ . \\ |\kappa|-1 \\ |\kappa| \end{pmatrix}$$

to successively obtain all unordered sublists of length $i$.

The access to $L(i,\kappa')$ for some unordered sublist $\kappa'$ of length $i$ is realized by computing an index $\alpha$ with $L(i,\kappa') = L(\alpha)$ from the vector representation of $\kappa'$ :

$$\alpha = \sum_{j=1}^{i} 2^{a_j - 1},$$

where $a_j$ is the $j$ th element of the vector representation of $\kappa'$. The addition or removal of a tag to or from $\kappa'$ is reflected in the index of the tag. The index $\beta$ of the complement unordered list of tags needed for accessing $R(i,(\kappa \setminus \kappa') \setminus \{k\}) = R(\beta)$ is easily computed by

$$\beta = 2^{|\kappa|} - 1 - \alpha - 2^{a-1}.$$

For faster computation, there is a table whose $j$th entry contains the value $2^j$.

The dynamic programming computation of the list $R$ is performed by calling the subroutine that uses dynamic programming to compute the list $L$ with a list of phrases $\overline{W}$ whose phrase order is reversed, i.e. $\overline{W}'_i = \overline{W}_{s-i+1}$.

Sentences with an unequal number of tags and phrases are discarded.

The initial probabilities $p(k, \overline{w})$ are read in from a file and $p(\overline{w})$ is computed as marginal for $p(k|\overline{w})$. The file simply lists $k$ , $\overline{w}$, and $p(k, \overline{w})$ in one ASCII line. The estimated probabilities $\tilde{p}(k, \overline{w})$ are written down in the same format and thus serve as input for the next iteration.

Figure 2 illustrates a flow chart for iteratively calculating the probability $L(i,\kappa')$ for all permutations of the unordered tag sublist $\kappa'$ of length $i$ over the left subsentence up to position $i$.

Initially, in step 200 the probability $L(0,\{\})$ is set to unity, before the index $i$ is set to $i=1$ in step 202.

In step 204, a loop starts and each unordered sublist $\kappa'$ of length $i$ is selected. In the proceeding step 206, the probability $L(i,\kappa') = 0$ for each selected unordered sublist is set to zero before in the next step 208 each tag $k$ which is an element of the unordered sublist is selected. In step 210 finally, the probability $L(i,\kappa')$ is calculated according to:

$$L(i,\kappa') = L(i,\kappa') + L(i-1,\kappa' \setminus \{k\}) \cdot p(k \mid \overline{w}_i).$$

In step 212 it is checked whether the index $i$ is smaller or equal the number of words in the phrase. If $i \leq |\overline{W}|$ in step 212, then $i$ is incremented by one, and the procedure returns to step 204. When in contrast $i > |\overline{W}|$, then the procedure stops in step 214.

The calculation of the probability for all permutations of the unordered complement tag sublist of the right subsentence from position $i + 1$ is performed correspondingly.

Figure 3 is illustrative of a flow chart diagram for calculating a mapping probability $\tilde{p}(k, \overline{w})$ on the basis of the EM algorithm. In step 300 for all tags $k$ and phrases $w$ the probability $p(k \mid \overline{w})$ is initialized by setting $\tilde{q} = 0$ and setting $\tilde{q}(k,\overline{w}) = 0$, before in step 302 one of the training corpus sentences is selected. Since every sentence of the training corpus is taken into account for the grammar learning, the following step 304 has to be applied to all sentences of the training corpus.

After a sentence of the training corpus has been selected in step 302 it is further processed in step 304, in which the steps 306, 308, 310, and 312 are successively applied. In step 306, an unordered tag list κ as well as an ordered phrase list $\overline{W}$ are selected. In the next step 308, the dynamic programming construction of the table $L$ is performed as described in figure 2. After that, a similar procedure is performed with the reversed table $R$ in step 310.

The calculated tables as well as the initialized probabilities are further processed in step 312. Step 312 can be interpreted as a nested loop with an index $i = 1, i \leq |\overline{W}|$. For each $i$ step 314 is performed initializing another loop for each of the unordered sublists κ' of length $i - 1$. For each unordered sublist the step 316 is performed selecting each tag $k \notin$ κ' and performing the following calculation in step 318:

$$\widetilde{q}' = L(i-1,\kappa') \cdot p(k \mid \overline{w}_i) \cdot R(i+1,(\kappa \setminus \kappa') \setminus \{k\}),$$

where $\widetilde{q}'$ is further processed in step 320 according to:

$$\widetilde{q}(k,\overline{w}_i) = \widetilde{q}(k,\overline{w}_i) + \widetilde{q}' \ \text{ and } \ \widetilde{q} = \widetilde{q} + \widetilde{q}'.$$

When the steps 318 and 320 have been executed for each tag $k \notin$ κ' in step 316, when step 316 has been performed for each unordered sublist of length $i$-1 in step 314, when step 314 has been performed for each index i $\leq$ $|\overline{W}|$ in step 312, and when finally the entire procedure given by step 312 has been performed for each sentence of the training corpus, then in step 322 the mapping probability is determined according to:

$$\widetilde{p}(k,\overline{w}) = \widetilde{q}(k,\overline{w})/\widetilde{q} \ \forall k, w.$$

**Claims**

1.  A method of calculating a mapping probability that a semantic tag of a set of candidate semantic tags is assigned to a phrase, wherein the calculation of the mapping probability is performed by means of a statistical procedure based on a set of phrases constituting a corpus of sentences, each of the phrases having assigned a set of candidate semantic tags, wherein the semantic tag of the set of candidate semantic tags having the highest mapping probability of the set of mapping probabilities is mapped to the phrase, and wherein performed mappings between a candidate semantic tag and a phrase in form of a mapping table are stored, wherein the mapping table relates to a grammar being applicable to new, unknown sentences and/or unknown phrases.

2.  The method according to claim 1, for each phrase further comprising calculating a set of mapping probabilities, providing the probability for each semantic tag of the set of candidate semantic tags being assigned to the phrase.

3.  The method according to any one of the claims 1 or 2, wherein the statistical procedure comprises an expectation maximization alogrithm.

4.  A computer program product for calculating a mapping probability that a semantic tag of a set of candidate semantic tags is assigned to a phrase, wherein the calculation of the mapping probability is performed by means of a statistical procedure based on a set of phrases constituting a corpus of sentences, each of the phrases having assigned a set of candidate semantic tags, wherein the computer program product comprises program means for determining one semantic tag of the set of candidate semantic tags having the highest mapping probability of the set of mapping probabilities and mapping the one semantic tag to the phrase, and wherein the computer program product comprises program means for storing of performed mappings between a semantic tag and a phrase or a sequence of phrases in form of a mapping table, wherein the mapping table relates to a grammar being applicable to new, unknown sentences or unknown phrases or unknown sequences of phrases.

5.  The computer program product according to claim 6, for each phrase further comprising program means for calculating a set of mapping probabilities, providing the probability for each semantic tag of the set of candidate semantic tags being assigned to the phrase.

6. The computer program product according to any one of the claims 4 to 5, wherein the statistical procedure comprises an expectation maximization algorithm.

7. A system for mapping a semantic tag to a phrase comprising means for calculating a mapping probability that a semantic tag of a set of candidate semantic tags is assigned to a phrase, wherein the calculation of the mapping probability is performed by means of a statistical procedure based on a set of phrases constituting a corpus of sentences, each of the phrases having assigned a set of candidate semantic tags, wherein the system further has means for determining one semantic tag of the set of candidate semantic tags having the highest mapping probability of the set of mapping probabilities and mapping the one semantic tag to the phrase, and means for storing of performed mappings between a semantic tag and a phrase or a sequence of phrases is form of a mapping table, wherein the mapping table relates to a grammar being applicable to new, unknown sentences or unknown phrases or unknown sequences of phrases.

8. The system according to claim 7, for each phrase further comprising calculating a set of mapping probabilities, providing the probability for each semantic tag of the set of candidate semantic tags being assigned to the phrase.

9. The system according to any one of the claims 7 to 8, wherein the statistical procedure comprises an expectation maximization algorithm.

**Patentansprüche**

1. Verfahren zum Berechnen einer Abbildungswahrscheinlichkeit, dass ein semantisches Etikett einer Gruppe von in Frage kommenden semantischen Etiketten einer Phrase zugeordnet ist, wobei die Berechnung der Abbildungswahrscheinlichkeit mit Hilfe einer statistischen Prozedur erfolgt, die auf einer einen Satzkorpus bildenden Gruppe von Phrasen basiert und jeder der Phrasen eine Gruppe von in Frage kommenden semantischen Etiketten zuordnet ist, wobei das semantische Etikett der Gruppe von in Frage kommenden semantischen Etiketten mit der höchsten Abbildungswahrscheinlichkeit der Gruppe von Abbildungswahrscheinlichkeiten auf die Phrase abgebildet wird, und wobei durchgeführte Abbildungen zwischen einem in Frage kommenden semantischen Etikett und einer Phrase in Form einer Abbildungstabelle gespeichert werden, wobei sich die Abbildungstabelle auf eine Grammatik bezieht, die auf neue, unbekannte Sätze und/oder unbekannte Phrasen anwendbar ist.

2. Verfahren nach Anspruch 1, das für jede Phrase weiterhin das Berechnen einer Gruppe von Abbildungswahrscheinlichkeiten umfasst und für jedes semantische Etikett der Gruppe von in Frage kommenden semantischen Etiketten die Wahrscheinlichkeit der Zuordnung zu der Phrase liefert.

3. Verfahren nach einem der Ansprüche 1 oder 2, wobei die statistische Prozedur einen Erwartungsmaximierungsalgorithmus umfasst.

4. Computerprogrammprodukt zum Berechnen einer Abbildungswahrscheinlichkeit, dass ein semantisches Etikett einer Gruppe von in Frage kommenden semantischen Etiketten einer Phrase zugeordnet ist, wobei die Berechnung der Abbildungswahrscheinlichkeit mit Hilfe einer statistischen Prozedur erfolgt, die auf einer einen Satzkorpus bildenden Gruppe von Phrasen basiert und jeder der Phrasen eine Gruppe von in Frage kommenden semantischen Etiketten zugeordnet ist, wobei das Computerprogrammprodukt Programmmittel zum Bestimmen eines semantischen Etiketts der Gruppe von in Frage kommenden semantischen Etiketten, das die höchste Abbildungswahrscheinlichkeit der Gruppe von Abbildungswahrscheinlichkeiten hat, und zum Abbilden des einen semantischen Etiketts auf die Phrase umfasst, und wobei das Computerprogrammprodukt Programmmittel zum Speichern der durchgeführten Abbildungen zwischen einem semantischen Etikett und einer Phrase oder einer Phrasensequenz in Form einer Abbildungstabelle umfasst, wobei sich die Abbildungstabelle auf eine Grammatik bezieht, die auf neue, unbekannte Sätze oder unbekannte Phrasen oder unbekannte Phrasensequenzen anwendbar ist.

5. Computerprogrammprodukt nach Anspruch 6, das für jede Phrase weiterhin Programmmittel zum Berechnen einer Gruppe von Abbildungswahrscheinlichkeiten umfasst und für jedes semantische Etikett der Gruppe von in Frage kommenden semantischen Etiketten die Wahrscheinlichkeit der Zuordnung zu der Phrase liefert.

6. Computerprogrammprodukt nach einem der Ansprüche 4 bis 5, wobei die statistische Prozedur einen Erwartungsmaximierungsalgorithmus umfasst.

**7.** System zum Abbilden eines semantischen Etiketts auf eine Phrase mit Mitteln zum Berechnen einer Abbildungswahrscheinlichkeit, dass ein semantisches Etikett einer Gruppe von in Frage kommenden semantischen Etiketten einer Phrase zugeordnet ist, wobei die Berechnung der Abbildungswahrscheinlichkeit mit Hilfe einer statistischen Prozedur erfolgt, die auf einer einen Satzkorpus bildenden Gruppe von Phrasen basiert und jeder der Phrasen eine Gruppe von in Frage kommenden semantischen Etiketten zugeordnet ist, wobei das System weiterhin Mittel zum Bestimmen eines semantischen Etiketts der Gruppe von in Frage kommenden semantischen Etiketten, das die höchste Abbildungswahrscheinlichkeit der Gruppe von Abbildungswahrscheinlichkeiten hat, und zum Abbilden des einen semantischen Etiketts auf die Phrase umfasst, und Mittel zum Speichern der durchgeführten Abbildungen zwischen einem semantischen Etikett und einer Phrase oder einer Phrasensequenz in Form einer Abbildungstabelle umfasst, wobei sich die Abbildungstabelle auf eine Grammatik bezieht, die auf neue, unbekannte Sätze oder unbekannte Phrasen oder unbekannte Phrasensequenzen anwendbar ist.

**8.** System nach Anspruch 7, das für jede Phrase weiterhin das Berechnen einer Gruppe von Abbildungswahrscheinlichkeiten umfasst und für jedes semantische Etikett der Gruppe von in Frage kommenden semantischen Etiketten die Wahrscheinlichkeit der Zuordnung zu der Phrase liefert.

**9.** System nach einem der Ansprüche 7 bis 8, wobei die statistische Prozedur einen Erwartungsmaximierungsalgorithmus umfasst.

**Revendications**

**1.** Procédé de calcul d'une probabilité de correspondance qu'une balise sémantique d'un ensemble de balises sémantiques candidates soit attribuée à une locution, dans lequel le calcul de la probabilité de correspondance est effectué au moyen d'une procédure statistique sur la base d'un ensemble de locutions formant un corpus de phrases, un ensemble de balises sémantiques candidates étant attribué à chacune des locutions, dans lequel la balise sémantique de l'ensemble de balises sémantiques candidates présentant la probabilité de correspondance la plus élevée de l'ensemble de probabilités de correspondance est mise en correspondance avec la locution, et dans lequel les correspondances établies entre une balise sémantique candidate et une locution sous la forme d'un tableau de correspondances sont mémorisées, dans lequel le tableau de correspondances est lié à une grammaire s'appliquant à de nouvelles phrases inconnues et/ou locutions inconnues.

**2.** Procédé suivant la revendication 1, comprenant en outre, pour chaque locution, le calcul d'un ensemble de probabilités de correspondance, fournissant la probabilité pour chaque balise sémantique de l'ensemble de balises sémantiques candidates attribuée à la locution.

**3.** Procédé suivant l'une quelconque des revendications 1 à 2, dans lequel la procédure statistique comprend un algorithme de maximisation de valeur probable.

**4.** Produit formant programme informatique pour calculer une probabilité de correspondance qu'une balise sémantique d'un ensemble de balises sémantiques candidates soit attribuée à une locution, dans lequel le calcul de la probabilité de correspondance est effectué au moyen d'une procédure statistique sur la base d'un ensemble de locutions formant un corpus de phrases, un ensemble de balises sémantiques candidates étant attribué à chacune des locutions, dans lequel le produit formant programme informatique comprend des moyens formant programme pour déterminer une balise sémantique de l'ensemble de balises sémantiques candidates présentant la probabilité de correspondance la plus élevée de l'ensemble de probabilités de correspondance et la mise en correspondance de la balise sémantique avec la locution, et dans lequel le produit formant programme informatique comprend des moyens formant programme pour mémoriser des correspondances établies entre une balise sémantique et une locution ou une succession de locutions sous la forme d'un tableau de correspondances, dans lequel le tableau de correspondances est lié à une grammaire s'appliquant à de nouvelles phrases inconnues ou locutions inconnues ou successions inconnues de locutions.

**5.** Produit formant programme informatique suivant la revendication 6, comprenant en outre, pour chaque locution, des moyens formant programme pour calculer un ensemble de probabilités de correspondance, fournissant la probabilité pour chaque balise sémantique de l'ensemble de balises sémantiques candidates attribuée à la locution.

**6.** Produit formant programme informatique suivant l'une quelconque des revendications 4 à 5, dans lequel la procédure statistique comprend un algorithme de maximisation de valeur probable.

**7.** Système pour mettre en correspondance une balise sémantique avec une locution comprenant des moyens pour calculer une probabilité de correspondance qu'une balise sémantique d'un ensemble de balises sémantiques candidates soit attribuée à une locution, dans lequel le calcul de la probabilité de correspondance est effectué au moyen d'une procédure statistique sur la base d'un ensemble de locutions formant un corpus de phrases, un ensemble de balises sémantiques candidates étant attribué à chacune des locutions, dans lequel le système comprend en outre des moyens pour déterminer une balise sémantique de l'ensemble de balises sémantiques candidates présentant la probabilité de correspondance la plus élevée de l'ensemble de probabilités de correspondance et mettre en correspondance la balise sémantique avec la locution, et des moyens pour mémoriser des correspondances établies entre une balise sémantique et une locution ou une succession de locutions sous la forme d'un tableau de correspondances, dans lequel le tableau de correspondances est lié à une grammaire s'appliquant à de nouvelles phrases inconnues ou locutions inconnues ou successions inconnues de locutions.

**8.** Système suivant la revendication 7, comprenant en outre, pour chaque locution, le calcul d'un ensemble de probabilités de correspondance, fournissant la probabilité pour chaque balise sémantique de l'ensemble de balises sémantiques candidates attribuée à la locution.

**9.** Système suivant l'une quelconque des revendications 7 à 8, dans lequel la procédure statistique comprend un algorithme de maximisation de valeur probable.

extract phrase $\overline{w}$
from training corpus
sentence —⌐ 100

calculate mapping
probability $\tilde{p}(k,\tilde{w})$
for each $k \in K$ —⌐ 102

determine highest
probability $\tilde{p}_{max}$ —⌐ 104

map phrase $\overline{w}$ to
semantic tag k —⌐ 106

store mapping
generate grammar —⌐ 108

# FIG. 1

set  L(o,{}) = 1 — 200

i = 1 — 202

select each unordered
sublist κ' of length i — 204

i = i + 1

set  L(i, κ') = 0 — 206

select each tag
κ ∈ κ' — 208

set  L(i, κ') = L(i, κ') + L(i-1, κ'\{k}) . $p(k|\overline{w}_i)$ — 210

Yes

$i \leq |\overline{W}|$ — 212

No

End — 214

# FIG. 2

initialize $p(k|\overline{w})$ and set $\tilde{q} = 0$
and $\tilde{q}(k,\overline{w}) = 0 \forall k,w$ —300

select training corpus sentence —302

304

for each training corpus sentence:

fetch (unordered) tag list $\kappa$
and (ordered) phrase list $\overline{W}$ —306

dynamic programming construction
of table $L(DP(\kappa,\overline{W}))$ —308

dynamic programming construction
of table $R(DP(\kappa,\text{reversed } \overline{W})))$ —310

312

for each $i$ from 1 to $|\overline{W}|$ : 314

for each unordered sublist $\kappa'$ of length $i - 1$ : 316

for each $\kappa \notin \kappa'$ : 318

set $\tilde{q}' = L(i-1,\kappa').p(k|\overline{w}_i).R(i+1,(\kappa \backslash \kappa')\backslash\{k\})$

320

set $\tilde{q}(k,\overline{w}_i) = \tilde{q}(k,w_i)+\tilde{q}'$ and $\tilde{q} = \tilde{q} + \tilde{q}'$

set $\tilde{p}(k,\overline{w})=\tilde{q}(k,\overline{w})/\tilde{q} \forall k,w$ —322

# FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030191625 A1
- EP 1465155 A2
- US 20030081024 A1
- US 20030061024 A1

**Non-patent literature cited in the description**

- **H. AUST ; M. OERDER ; F. SEIDE ; V. STEINBISS.** *Philips Automatic Train Timetable Information System, Speech Communication,* 1995, vol. 17, 249-262
- **WANG et al.** Combination of CFG and N-gram Modeling in Semantic Grammar Learning. *European Conference on Speech Communication and Technology,* September 2003, 2809-2812
- **K MACHEREY ; F. J. OCH ; H. NEY.** Natural Language Understanding using Statistical Machine Translation. *7th EuropeanConference on Speech Communication and Technology,* September 2001